# EUROPÄISCHE PATENTSCHRIFT

(11) **EP 0 714 479 B1**
(45) Veröffentlichungstag und Bekanntmachung des Hinweises auf die Patenterteilung: **12.02.1997**
(21) Anmeldenummer: 94913567.7
(22) Anmeldetag: 11.04.1994
(51) Int. Cl.: F02F 3/00, F16J 1/00, F02B 23/06

(54) **KOLBEN FÜR BRENNKRAFTMASCHINEN, INSBESONDERE FÜR DIESELMOTOREN**
PISTON FOR INTERNAL COMBUSTION ENGINES, ESPECIALLY DIESEL ENGINES
PISTON POUR MOTEURS A COMBUSTION INTERNE, NOTAMMENT POUR MOTEURS DIESEL

(30) Priorität: 11.08.1993 DE 4326978
(43) Veröffentlichungstag der Anmeldung: 05.06.1996
(73) Patentinhaber: ALCAN DEUTSCHLAND GMBH, D-37075 Göttingen (DE)
(72) Erfinder: HOFMANN, Lothar, D-92318 Neumarkt/Opf. (DE); SCHWARZ, Rudolf, D-90469 Nürnberg (DE); DEUBER, Andreas, D-90449 Nürnberg (DE); OBERMEIER-WAGNER, Karl-Heinz, D-90763 Fürth (DE)
(74) Vertreter: Füchsle, Klaus, Dipl.-Ing.
(86) Internationale Anmeldenummer: EP9401111
(87) Internationale Veröffentlichungsnummer: WO9504880

(56) Entgegenhaltungen:
- WO-A-90/04711
- WO-A-90/07642
- WO-A-92/05355
- DE-A- 1 576 018
- DE-A- 2 431 646
- DE-A- 2 639 294

## Beschreibung

Die vorliegende Erfindung betrifft einen Kolben, insbesondere für schnellaufende Direkteinspritz-Dieselmotoren.

Derartige Kolben weisen eine verhältnismäßig niedrige Kompressionshöhe auf und erreichen deshalb sehr hohe Nabentemperaturen von über 200°C. Die Temperaturen am Rand der im Kolben vorgesehenen Brennraummulde erreichen dabei eine Höhe von über 300°C. Da zudem bei den Motoren der obengenannten Art üblicherweise Zünddrücke im Bereich von mehr als 13 MPa vorherrschen, führt dies bei Aluminiumkolben sehr häufig zu Rissen im Nabenbereich und im Randbereich der Brennraummulde. Außerdem unterliegen die Flanken der Kolbenringnuten bei hohen Temperaturen einem besonders hohen Verschleiß.

Aus dem Stand der Technik sind zur Vermeidung der eingangs genannten Probleme bisher die verschiedensten Lösungen vorgeschlagen worden. So beschreibt beispielsweise die DE-OS 26 07 624 einen Leichtmetallkolben, bei dem in den Bohrungen der Bolzennaben Lagerbüchsen mit höherer Festigkeit und Dehnung eingepreßt sind, wobei zwischen dem Innenrand der Bolzenbohrungen und dem in diesem Bereich gegenüberliegenden Außenrand der Lagerbüchse ein Spalt vorgesehen ist. In ähnlicher Weise beschreibt die DE-OS 36 39 806 einen Leichtmetallkolben, bei dem oberhalb der die Bolzenrichtung umfassenden Horizontalebene Einlagen eingegossen sind.

Ferner ist aus der DE-PS 31 19 113 ein Leichtmetallkolben für Dieselmotoren bekannt, bei dem der Rand der Brennraummulde durch ein Einsatzteil verstärkt ist, das aus einer Kupferlegierung besteht und mit einer chemisch oder galvanisch abgeschiedenen Eisenschicht überzogen ist. Hierdurch soll der äußerst belastete Muldenrandbereich verstärkt werden.

Aus der DE-OS 34 44 406 ist eine Faserverstärkung bzw. Faserarmierung für Brennraummulden hochbelasteter Kolben bekannt. Schließlich beschreibt die DE-OS 40 10 474 einen Leichtmetallkolben mit einer Armierung für Ringnuten.

Die Nachteile der obengenannten Vorschläge aus dem Stand der Technik sind jedoch stets eine sehr aufwendige und damit teure Herstellung des Kolbens sowie in der Regel eine Erhöhung des Kolbengewichtes.

Eine weitere aus dem Stand der Technik allgemein bekannte Möglichkeit, die obengenannten Probleme bei hochbelasteten Kolben zu vermeiden, ist eine Kolbendimensionierung, welche die Beanspruchungen des Kolbens entsprechend berücksichtigt. Diese Lösung führt jedoch bei hochbelasteten Kolben zu entsprechend hohen Wandstärken, was wiederum die bereits erwähnten Nachteile eines höheren Kolbengewichtes und einer entsprechend teureren Herstellung mit sich bringt.

Weiter wurde im Stand der Technik bereits angeregt, Kolben aus warmfesten Aluminiumlegierungen durch Preßgießen (squeeze casting) herzustellen. Hierbei brachte das durch ein derartiges Herstellungsverfahren entstandene feinkörnigere und festere Gefüge zwar eine gewisse Verbesserung, jedoch sind derartige Kolben aufgrund des komplizierten Herstellungsverfahrens zu aufwendig und zu teuer.

Aus der WO 90/04711 ist ein gebauter Kolben mit einem Kolbenkopf auf Stahl und einem Kolbenunterteil aus Aluminium bekannt. Bei diesem Kolben liegt eine Kompressionshöhe von KH ≅ 0,55·D vor.

Ferner ist aus der WO 92/05355 ein Einmetall-Leichtbaukolben für Ottomotoren bekannt. Hierbei weisen Kompressionshöhe KH, Muldentiefe MT und innerer Nabenabstand AA folgende Werte auf: KH = (0,27 - 0,35) ·D, MT = (0,03 - 0,08) ·D und AA = (0,08 - 0,20) ·D.

Es ist das der vorliegenden Erfindung zugrundeliegende Problem (Aufgabe), einen hochbelastbaren Kolben für Brennkraftmaschinen zu schaffen, der ein geringes Gewicht aufweist, einfach und billig herzustellen ist und der darüber hinaus hohen thermischen und mechanischen Beanspruchungen standhält.

Diese Aufgabe wird durch die Merkmale des Patentanspruchs 1 gelöst.

Aufgrund der erfindungsgemäßen Abmessungen des Kolbens weist dieser eine - verglichen zu herkömmlichen Kolben - leichtere Bauweise auf, wobei die Belastungsfähigkeit verglichen mit dem Stand der Technik zumindest gleich ist, ohne daß eine Armierung hochbelasteter Stellen durch Eingießteile, Einsetzen von Büchsen oder durch die Festigkeit verbessernde Oberflächenbeschichtungen erforderlich wäre.

Vorteilhafte Ausführungsformen der Erfindung sind durch die Unteransprüche gekennzeichnet.

Durch die vorgeschlagene, vorteilhafte Aluminiumlegierung mit festigkeitssteigernden Legierungsbestandteilen wie z.B. Kupfer und Nickel ist ein äußerst belastbarer Kolben geschaffen, der zudem einen geringen Reibverschleiß aufweist, da bei dieser Legierung in einer sehr warmfesten Matrix ein hoher Primärsiliziumanteil vorhanden ist. Zwar würde diese Zusammensetzung der Legierung nach den bisherigen Erkenntnissen der Fachwelt erwarten lassen, daß eine Legierung dieses Typs schwer gießbar ist und darum zu fehlerhaften Kolben mit entsprechend schlechten Eigenschaften führt. Jedoch hat sich überraschenderweise herausgestellt, daß der vorgeschlagene Werkstoff nicht nur äußerst warmfest ist, sondern sich wider Erwarten auch gut gießen läßt, d.h. die Legierung kann mittels eines einfachen Gießverfahrens verarbeitet werden, ohne daß beispielsweise Preßguß notwendig wäre.

Besondere Vorteile ergeben sich dadurch, daß ein Kolben nach Anspruch 1, 2 oder 3 mit der vorgeschlagenen Legierung nach Anspruch 4 hergestellt wird. Hierdurch ist nämlich ein hochbelastbarer Kolben geschaffen, der trotz seines verhältnismäßig "filigranen" Kolbenaufbaus den äußerst starken Belastungen im Motor standhält. Ein solcher Kolben ist leicht und billig herzustellen und weist hervorragende Festigkeitswerte, insbesondere auch bei hohen Temperaturen auf.

Nachfolgend wird die vorliegende Erfindung anhand einer vorteilhaften Ausführungsform unter Bezugnahme auf die beigefügten Zeichnungen beispielhaft beschrieben. Es zeigen:
- Fig. 1: einen Schnitt in der Pleuelschwingebene durch einen Kolben gemäß der Erfindung;
- Fig. 2: einen Teilschnitt entlang der Linie II-II in Fig. 1; und
- Fig. 3: einen Schnitt durch den Kolben von Fig. 1 entlang der Linie III-III in Fig. 1.

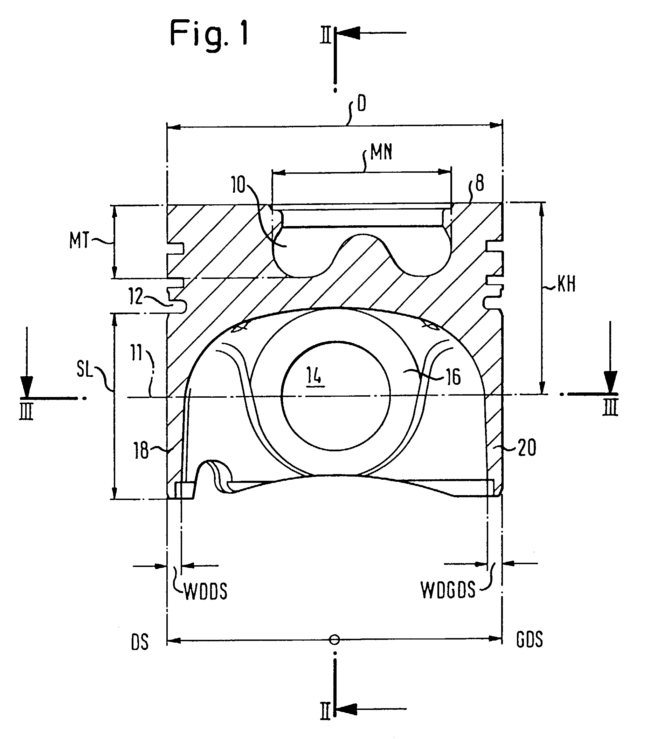

Fig. 1 zeigt einen Kolben gemäß der Erfindung, der im Kolbenboden 8 eine Brennraummulde 10 aufweist. Hierbei ist unter den in Fig. 1 angegebenen Maßen jeweils folgendes zu verstehen: D bezeichnet den Kolbendurchmesser, wobei KH die Kompressionshöhe bezeichnet, d.h. den Abstand zwischen Kolbenboden 8 und Kolbenbolzenachse 11. Die Brennraummulde 10 weist einen Durchmesser MN auf und besitzt eine Tiefe MT. Die Länge des Kolbenschaftes unterhalb einer untersten Kolbenringnut 12 ist mit SL bezeichnet. Schließlich sind die Dicken der Schaftwand 18 auf der Druckseite DS und der Schaftwand 20 auf der Gegendruckseite GDS mit WDDS (Druckseite) und WDGDS (Gegendruckseite) angegeben.

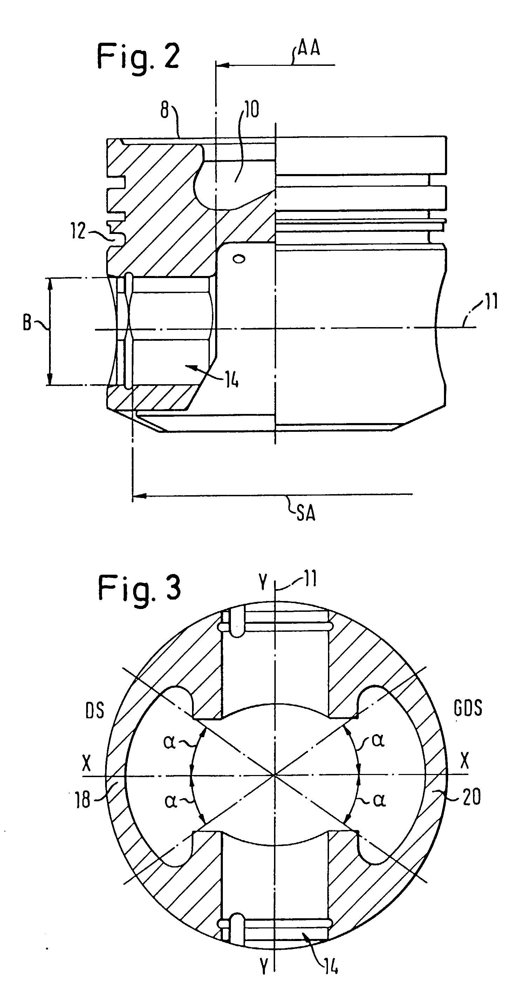

In Fig. 2 bezeichnet das Bezugszeichen B den Durchmesser B einer Bolzenbohrung 14, wobei SA das Maß für die Kolbenbolzenlänge ist. Schließlich ist mit AA der radial innere Abstand der Kolbenbolzennaben 16 (vgl. Fig. 1) angegeben.

In Fig. 3 ist mit X die Pleuelschwingebene und mit Y die Kolbenbolzenebene bezeichnet. Ein Winkelbereich α erstreckt sich zwischen der Pleuelschwingebene X und der Kolbenbolzenebene Y. In diesem Bereich α ändert sich sowohl die Dicke der Schaftwand 18 auf der Druckseite DS wie auch die Dicke der Schaftwand 20 auf der Gegendruckseite GDS. Hierbei verjüngen sich jeweils die Schaftwanddicken im Verlauf in Richtung von der der Kolbenbolzenebene Y zur Pleuelschwingebene X.

Nachfolgend werden die Maße eines Kolbens gemäß der Erfindung aufgeführt, wobei jeweils die grundsätzliche Bemessungsregel sowie die Bemessung eines bevorzugten Ausführungsbeispieles angegeben ist:

| | **Bez.** | **Abmessungsbereiche** | **Ausführungsbeispiel** |
|---|---|---|---|
| Kolbendurchmesser | D | nach Bedarf | 81 mm |
| Kompressionshöhe | KH | 0,48 is 0,63 D | 0,56 D |
| Tiefe der Brennraummulde | MT | 0,16 bis 0,35 D | 0,21 D |
| Durchmesser der Brennraummulde | MN | 0,4 bis 0,62 D | 0,54 D |
| radial innerer Abstand der Kolbenbolzennaben oberhalb der Kolbenbolzenachse | AA | 0,24 bis 0,43 D | 0,27 D |
| Durchmesser des Bolzenbohrung | B | 0,29 bis 0,41 D | 0,32 D |
| Länge des Kolbenbolzens | SA | 0,7 bis 0,86 D | 0,83 D |
| Länge des Kolbenschafts unterhalb der untersten Kolbenringnut | SL | 0,25 bis 0,45 D | 0,32 D |
| Schwaftwanddicke des Kolbens auf der Druckseite bei X | WDDS (X) | 0,030 bis 0,065 D | 0,052 D |
| Schaftwanddicke des Kolbens auf der Gegendruckseite bei X | WDGDS (X) | 0,023 bis 0,047 D | 0,027 D |

Die Schaftwanddicke verringert sich auf der Druckseite (DS) im Winkelbereich α von Y in Richtung X kontinuierlich im Verhältnis von (0,09 bis 0,06)·D auf (0,065 bis 0,030) ·D. Auf der Gegendruckseite (GDS) verjüngt sich die Schaftwand im Winkelbereich α von Y in Richtung X kontinuierlich im Verhältnis von (0,09 bis 0,06)·D auf (0,047 bis 0,023) ·D.

Nachfolgend wird die vorteilhafte Legierung beschrieben.

Die besonders warmfeste Legierung gemäß einer vorteilhaften weiterbildung der Erfindung setzt sich aus den Elementen Kupfer, Nickel, Silizium, Magnesium, Eisen, Mangan, Aluminium sowie Restverunreinigungen (z.B. Zink, Zinn, Titan, Calcium u.a.) zusammen. In der folgenden Tabelle sind die Anteile der einzelnen Elemente an der Legierung angegeben, wobei für die Elemente Kupfer, Nickel, Silizium und Magnesium zusätzlich die Werte einer bevorzugten Ausführungsform angegeben sind:

| | | |
|---|---|---|
| Kupfer | Cu 2 bis 6 Gew% | bevorzugt 3,3 bis 4,0 Gew% |
| Nickel | Ni 2 bis 6 Gew% | bevorzugt 2,2 bis 3,0 Gew% |
| Silizium | Si 11 bis 16 Gew% | bevorzugt 11,0 bis 12,0 Gew% |
| Magnesium | Mg 0,5 bis 2,0 Gew% | bevorzugt 0,8 bis 1,3 Gew% |
| Eisen | Fe < 0,7 Gew% | |
| Mangan | Mn < 0,5 Gew% | |
| Summe der Verunreinigungen | < 0,15 Gew% | |
| Rest Aluminium | | |

Wie sich überraschenderweise gezeigt hat, kann bei Verwendung der oben angegebenen Legierung ein Kolben mit den oben angegebenen Maßen auf äußerst vorteilhafte Weise im normalen Kokillengießverfahren hergestellt werden, was sich beispielsweise im Gegensatz zum Preßgußverfahren ohne großen technischen Aufwand durchführen läßt.

Darüber hinaus besitzt diese Legierung erhöhte Festigkeitswerte gegenüber herkömmlichen Kolbenlegierungen. Durch Verwendung dieser Legierung läßt sich somit der oben beschriebene Kolben auf vorteilhafte Weise als hochbelastbarer Kolben herstellen, obwohl dieser eine relativ leichte Bauweise aufweist. Die Eigenschaften der erfindungsgemäßen Legierung zeigt folgende Tabelle, in der die Werte der Warm-Streckgrenze, der Warmzugfestigkeit und der Warm-Bruchdehnung der erfindungsgemäßen Legierung bei 250°C mit einer der gebräuchlichsten herkömmlichen eutektischen Kolbenlegierungen Nüral 3210 (GAlSi12CuNiMg) in zwei Verarbeitungszuständen verglichen werden:

| **Legierung** | **Streckgrenze (0,2 Dehngrenze) R**_{**p0,2**} **[N/mm**^{**2**}**] bei 250°C *** | **Zugfe stigkeit R**_{**m**} **[N/mm**^{**2**}**] bei 250°C *** | **Bruchdehnung A5 [%] bei 250°C *** |
|---|---|---|---|
| Nüral 3210 (vollvergütet) (G-AlSi12CuNiMg) | 80-110 | 100-150 | 3,0-5,0 |
| Nüral 3210 (teilvergütet) (G-AlSi12CuNiMg) | 90-110 | 130-150 | 1,0-2,0 |
| Legierung gemäß der Erfindung (teilvergütet) | 110-180 | 150-220 | 0,5-1,5 |

| | | | |
|---|---|---|---|
| * Prüfung jeweils nach einer Haltezeit von 10 min auf Prüftemperatur. | | | |

## Patentansprüche

1. Kolben für Brennkraftmaschinen, insbesondere für Dieselmotoren, mit
- einem Kolbendurchmesser D,
- einer Kompressionshöhe KH,
- einer Brennraummulde (10) mit dem Durchmesser MN und der Tiefe MT,
- einer Bolzenbohrung (14) mit Durchmesser B,
- einem radial inneren Abstand AA der Kolbenbolzennaben oberhalb der Kolbenbolzenachse,
- einer Kolbenbolzenlänge SA,
- einer Länge SL des Kolbenschafts unterhalb der untersten Kolbenringnut (12),
- einer Schaftwanddicke WDDS(X) auf der Druckseite in der Pleuelschwingebene X,
- einer Schaftwanddicke WDGDS(X) auf der Gegendruckseite in der Pleuelschwingebene X,
- wobei sich die Schaftwanddicken WDDS(X) und WDGDS(X) in einem Winkelbereich α zwischen der Pleuelschwingebene X und der Kolbenbolzenebene Y von Y in Richtung X kontinuierlich verringern, und
- wobei die genannten Maße innerhalb folgender Bereiche liegen:
KH = (0,48 bis 0,63) ·D
MT = (0,16 bis 0,35) ·D
MN = (0,40 bis 0,62) ·D
B = (0,29 bis 0,41) ·D
AA = (0,24 bis 0,43) ·D
SA = (0,70 bis 0,86) ·D
SL = (0,25 bis 0,45) ·D
WDDS (x) = (0,030 bis 0,065) ·D
WDGDS(X) = (0,023 bis 0,047) ·D,
- wobei sich die Schaftwanddicken im Winkelbereich a von der Kolbenbolzenebene Y in Richtung der Pleuelschwingebene X nach folgenden Maßgaben verringern:
von (0,09 bis 0,06)·D auf (0,065 bis 0,030) ·D auf der Druckseite, und
von (0,09 bis 0,06) ·D auf (0,047 bis 0,023) ·D auf der Gegendruckseite.

2. Kolben nach Anspruch 1,
dadurch gekennzeichnet, daß
der Winkelbereich α kleiner oder gleich 40° ist.

3. Kolben nach Anspruch 1 oder 2,
dadurch gekennzeichnet, daß
der Kolben folgende Maße aufweist:
D = 81 mm
KH = 0,56 D
MT = 0,21 D
MN = 0,54 D
B = 0,32 D
AA = 0,27 D
SA = 0,83 D
SL = 0,32 D
WDDS(X) = 0,052 D
WDGDS(X) = 0,027 D.

4. Kolben nach einem der Ansprüche 1 bis 3,
dadurch gekennzeichnet, daß
er aus einer Legierung hergestellt ist, bestehend in Gewichtsprozent aus:
2% bis 6% Kupfer
2% bis 6% Nickel
11 bis 16% Silizium
0,5 bis 2,0% Magnesium
weniger als 0,7% Eisen
weniger als 0,5% Mangan
Summe der
Verunreinigungen weniger als 0,15%
Rest Aluminium
und vorzugsweise
3,3 bis 4,0% Kupfer
2,2 bis 3,0% Nickel
11,0 bis 12,0% Silizium
0,8 bis 1,3% Magnesium.

5. Kolben nach Anspruch 4,
dadurch gekennzeichnet, daß
er im Kokillengießverfahren hergestellt ist.

## Claims

1. Piston for internal combustion engines, especially for diesel engines, with
- a piston diameter D,
- a compression height KH,
- a combustion chamber cavity (10) with the diameter MN and the depth MT,
- a pin bore (14) with a diameter B,
- a radially inner spacing AA of the piston pin hubs above the piston pin axis,
- a piston pin length SA,
- a length SL of the piston shaft below the lowest piston ring groove (12),
- a shaft wall thickness WDDS(X) on the pressure side in the connecting rod oscillation plane X,
- a shaft wall thickness WDGDS(X) on the counter-pressure side in the connecting rod oscillation plane X,
- the shaft wall thicknesses WDDS(X) and WDGDS(X) diminishing continuously, within an angular range α between the connecting rod oscillation plane X and the piston pin plane Y, from Y towards X, and
- the said dimensions lying within the following ranges:
KH = (0.48 to 0.63)·D
MT = (0.16 to 0.35)·D
MN = (0.40 to 0.62)·D
B = (0.29 to 0.41)·D
AA = (0.24 to 0.43)·D
SA = (0.70 to 0.86)·D
SL = (0.25 to 0.45)·D
WDDS(X) = (0.030 to 0.065)·D
WDGDS(X) = (0.023 to 0.047)·D
- the shaft wall thicknesses diminishing within the angular range α from the piston pin plane Y towards the connecting rod oscillation plane X according to the following limits:
from (0.09 to 0.06)·D to (0.065 to 0.030)·D on the pressure side, and
from (0.09 to 0.06)·D to (0.047 to 0.023)·D on the counter-pressure side.

2. Piston according to Claim 1,
characterized in that the angular range α is less than or equal to 40°.

3. Piston according to Claim 1 or 2,
characterized in that the piston has the following dimensions:
D = 81 mm
KH = 0.56 D
MT = 0.21 D
MN = 0.54 D
B = 0.32 D
AA = 0.27 D
SA = 0.83 D
SL = 0.32 D
WDDS(X) = 0.052 D
WDGDS(X) = 0.027 D

4. Piston according to any one of Claims 1 to 3, characterized in that it is produced from an alloy consisting, by weight percentage, of:
2 to 6% copper
2 to 6% nickel
11 to 16% silicon
0.5 to 2.0% magnesium
less than 0.7% iron
less than 0.5% manganese
total impurities less than 0.15%
remainder aluminium
and, preferably,
3.3 to 4.0% copper
2.2 to 3.0% nickel
11.0 to 12.0% silicon
0.8 to 1.3% magnesium

5. Piston according to Claim 4,
characterized in that it is produced by the gravity die casting method.

## Revendications

1. Piston pour moteurs à combustion interne, notamment pour moteurs Diesel, comportant
- un diamètre de piston D,
- un taux de compression KH,
- un alvéole de combustion (10) de diamètre MN et de profondeur MT,
- un alésage pour maneton de piston (14) de diamètre B,
- un espacement radialement intérieur AA du palier de maneton de piston au dessus de l'axe du maneton de piston,
- une longueur SA de maneton de piston,
- une longueur SL de corps de piston en dessous de la gorge la plus basse (12) du piston,
- une épaisseur WDDS(X) de la paroi de corps du côté-pression dans le plan d'oscillation X de la bielle,
- une épaisseur WDGDS(X) de la paroi de corps du côté contre-pression dans le plan d'oscillation X de la bielle,
- les épaisseurs WDDS(X) et WDGDS(X) de la paroi de corps diminuant progressivement, dans une plage angulaire α comprise entre le plan d'oscillation X de la bielle et le plan Y du maneton de piston, de Y en direction de X, et
- les dimensions précitées rentrant dans les plages suivantes:
KH = (0,48 à 0,63).D
MT = (0,16 à 0,35).D
MN = (0,40 à 0,62).D
B = (0,29 à 0,41).D
AA = (0,24 à 0,43).D
SA = (0,70 à 0,86).D
SL = (0,25 à 0,45).D 0,45).D
WDDS(X) = (0,030 à 0,065).D
WDGDS(X) = (0,023 à 0,047).D
- les épaisseurs de paroi de corps diminuant dans la plage angulaire α, du plan Y de pivot de piston en direction du plan d'oscillation X de la bielle, conformément aux critères suivants:
• de (0,09 à 0,06).D jusqu'à (0,065 à 0,030).D du côté pression, et
• de (0,09 à 0,06).D jusqu'à (0,047 à 0,023).D du côté contre-pression.

2. Piston selon la revendication 1, caractérisé en ce que la plage angulaire α est inférieure ou égale à 40°.

3. Piston selon la revendication 1 ou 2, caractérisé en ce que le piston a les dimensions suivantes:
D = 81 mm
KH = 0,56 D
MT = 0,21 D
MN = 0,54 D
B = 0,32 D
AA = 0,27 D
SA = 0,83 D
SL = 0,32 D
WDDS(X) = 0,052 D
WDGDS(X) = 0,027 D

4. Piston selon une des revendications 1 à 3, caractérisé en ce qu'il est fabriqué en un alliage contenant ( en pourcentage en poids):
2% à 6% de cuivre,
2% à 6% de nickel,
11% à 16% de silicium,
0,5% à 2,0% de magnésium,
moins de 0,7% de fer,
moins de 0,5% de manganèse,
une somme d'impuretés inférieure à 0,15%,
le reste en aluminium,
et avantageusement:
3,3 à 4,0% de cuivre
2,2 à 3,0% de nickel
11,0 à 12,0% de silicium
0,8 à 1,3% de magnésium

5. Piston selon la revendication 4, caractérisé en ce qu'il est fabriqué par un procédé de coulée en coquille.
